# EUROPEAN PATENT SPECIFICATION

(11) **EP 0 755 183 B1**
(45) Date of publication and mention of the grant of the patent: **09.09.1998**
(21) Application number: 94915708.5
(22) Date of filing: 10.03.1994
(51) Int. Cl.: A01K 91/18

(54) **APPARATUS FOR CONVEYING FISH HOOKS, ESPECIALLY LOOSE FISH HOOKS, TO A BAITING MACHINE**
VORRICHTUNG ZUM FÖRDERN VON ANGELHAKEN, INSBESONDERE FREIE ANGELHAKEN ZU EINEM KÖDERAPPARAT
DIPSOSITIF DE TRANSPORT D'HAME ONS, EN PARTICULIER DES HAME ONS LIBRES, VERS UN APPAREIL D'AMOR AGE

(43) Date of publication of application: 29.01.1997
(73) Proprietor: BJÖRSHOL, Kolbjörn, N-6560 Langöyneset (NO)
(72) Inventor: BJÖRSHOL, Kolbjörn, N-6560 Langöyneset (NO)
(74) Representative: Perklev, Karin Cecilia
(86) International application number: NO9400055
(87) International publication number: WO9524122

(56) References cited:
- NO-A- 923 668
- US-A- 4 477 992
- US-A- 4 631 850

## Description

The present invention relates to an apparatus for conveying fish hooks, especially separate fish hooks, one by one to a baiting machine, comprising a rail, for the reception of fish hooks in hanging condition on the top of the rail, an associated feeding arrangement, for conveying the fish hooks in series along the rail towards its one end, a hook-handling arrangement, for handling the fish hooks one after the other relative to the rail, and a chute, for delivering fish hooks to the baiting machine.

The apparatus according to the invention is more especially designed for use in connection with the baiting of fish hooks for fishing lines, where the fish hooks are introduced one by one into a baiting machine in connection with a baiting operation. The apparatus is particularly, but not exclusively, intended for use in connection with the handling of separate, that is to say loose fish hooks, the fish hooks in connection with the baiting operation or immediately after the baiting operation, being connected individually to an associated supply on a fishing line by means of connecting means known per se.

The apparatus shall thus be able to handle separate, that is to say loose fish hooks, which at the starting point are not connected with the supply. The movement of the fish hooks can thereby not be controlled by the movement of an associated supply, as previously conventional in connection with the baiting operation, for example as is shown in U.S. Patent 4,631,850, but must be controlled mainly by the apparatus itself. By this it is important that each single fish hook assumes precisely the position intended.

With the present invention the aim is to produce a relatively simple apparatus, which can convey fish hooks individually by way of simple means to a baiting machine, so that the fish hooks can be delivered directly to the baiting machine in an accurate manner in a specific position.

The apparatus according to the invention is characterised in that the hook-handling arrangement comprises a slide member, which is displaceable between a hook catching position and a hook delivery position in a path across said one end of the rail, that the slide member in a front side thereof is provided with a cavity facing towards the said one end of the rail and adapted for reception of a portion of a fish hook therein, that the cavity in said hook catching position of the slide member extends flush with an adjacent fish hook on the rail, for automatic reception of an adjacent fish hook by means of the pushing force exerted along the feeding arrangement, that the front side of the slide member beyond said cavity is adapted to bar a succeeding fish hook in a subsequent row of fish hooks on said feeding arrangement in slide positions outside said hook catching position, and that the cavity in said hook delivery position of the slide member is uncovered outside the rail, for automatic release of the fish hook for delivery of same into the chute to the baiting machine.

In connection with the baiting in a baiting machine there can also be effected an associated quality sorting. In this connection the apparatus as indicated above is well-suited and the quality sorting can be effected without appreciable complications in a controlled manner with the single fish hook in an accurately established position. The quality sorting can be effected immediately in front of the baiting machine.

According to the invention a positively controlled handling of the fish hooks is ensured by means of said slide member having an associated cavity which receives fish hooks one by one. The feeding arrangement is constantly feeding forwardly a series of fish hooks to the hook handling arrangement. The transfer of the fish hooks from the feeding arrangement to the delivery location can thus occur in a simple, accurately controlled manner, so that the fish hooks in the delivery position can assume an accurate position in connection with the subsequent baiting operation.

In the concept suggested above the slide member is allowed to be deplaced in a plane crossing the longitudinal axis of the hook supporting rail, i.e. in any suitable directions, i.e. in horizontal, vertical or any other direction crossing the longitudinal axis of the hook supporting rail.

In a further aspect of the present invention the apparatus is characterised in that the slide member consists of a bar-shaped member, which is reciprocatable in vertical directions relative to the rail, between an upper hook catching position and a lower hook delivery position, and that the cavity at its lower end is provided with a guide surface extending obliquely downwards and outwards for easy discharge of the fish hook from the slide member to the chute.

It is especially advantageous to move the slide member in a reciprocating movement in relation to the hook supporting rail.

By deplacing the slide member in vertical directions additional advantages are achieved as to structural simplicity of the apparatus and easy, controlled handling of the fish hooks from the slide member to the associated chute. It is thus evident that by moving the slide member and the fish hook contained in the cavity of the slide member vertically downwards, the fish hook tend to continue its vertically downwards movement. This will ensure movement of the fish hook away from said cavity and safely into the following chute.

Further features of the invention will be evident from the following description having regard to the accompanying drawings, in which:
Fig. 1 shows in perspective the apparatus according to the invention including a sorting apparatus for fish hooks combined with a subsequent baiting apparatus.
Fig. 2 shows a section of the apparatus of Fig.1, including a part of a feed rail with associated feeding arrangement plus a hook-catching arrangement which is illustrated in a hook catching position.
Fig. 3 shows the same as in Fig. 2 with the hook-catching arrangement illustrated in a hook delivery position.
Fig. 4 and 5 show, in the form of sections of Figs. 2 and 3, cross-sections of rail, hook-catching arrangement plus adjacent fish hooks.
Fig. 6 shows a detail in the sorting apparatus according to Fig. 1, seen from above.
Fig. 7 shows a cross-section of the detail illustrated in Fig. 6.

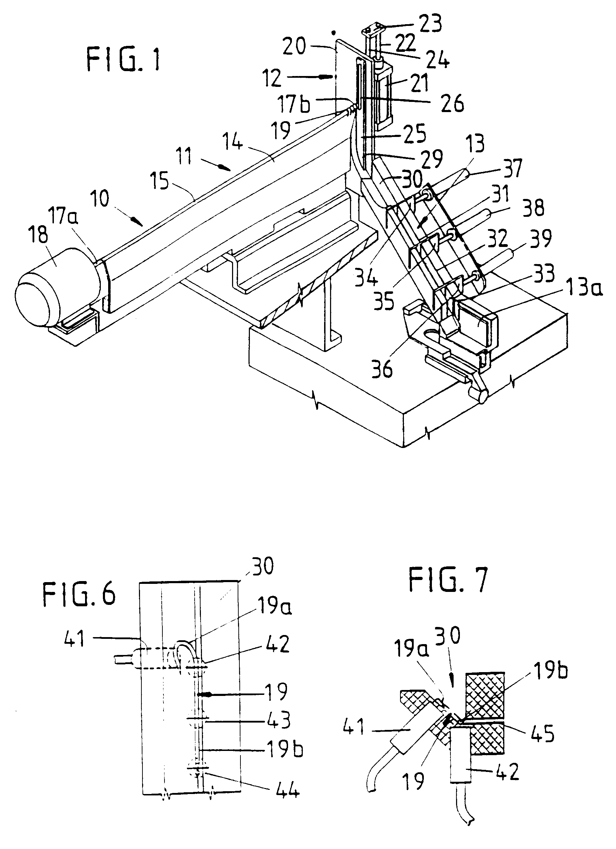

The apparatus 10, as shown in Fig. 1, comprises a feeding arrangement 11, a hook-catching arrangement 12, and a guide chute 13 with associated intake 13a to a baiting machine.

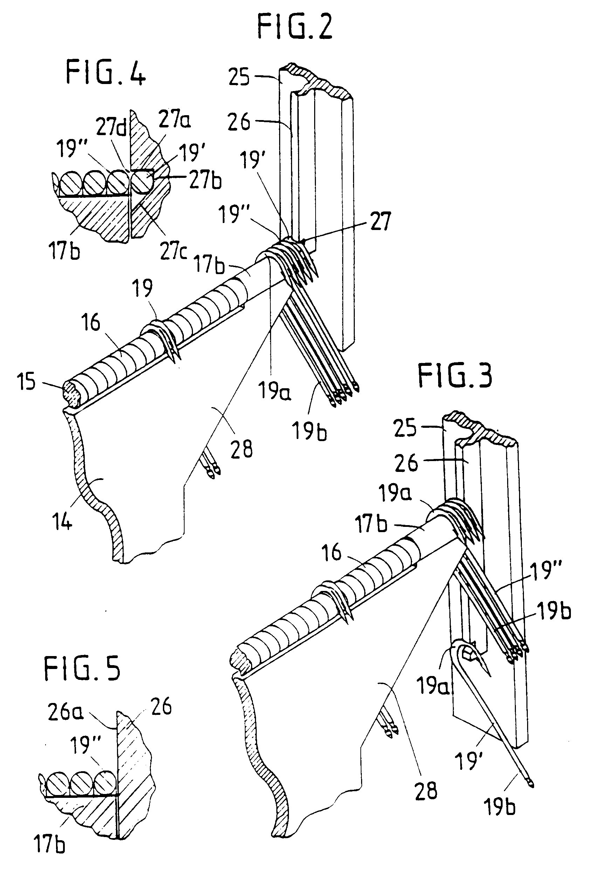

The feeding arrangement 11 comprises an elongate, horizontally extending rail 14 with associated feed bar 15 having screw thread 16 (see Fig. 2 and 3). The feed bar 15 is rotatably mounted in bearings 17a,17b at opposite ends of the rail 14 and a screw thread 16 of the feed bar 15 is uncovered in the region between the bearings 17a,17b. The feed bar 15 is rotated by means of an electric motor 18, so that fish hooks 19, which are suspended on the feeding arrangement 11 via the hook portion 19a (see Fig. 2 and 3), are automatically pushed forwards in a row from left to right of Fig. 1, along the screw thread 16 of the feed bar 15 and along bearing 17b flush with that at the right end of the feeding arrangement 11 or Fig. 1.

At the right hand end of the feeding arrangement 11 (see Fig. 2-5) the rail 14, that is to say that portion of the latter which forms the bearing 17b, is terminated endwise close to the hook-catching arrangement 12, which extends vertically across the rail 14, so that the fish hooks 19 are fed continuously to a support abutment against the hook-catching arrangement 12.

The hook-catching arrangement 12 comprises a carrier plate 20. On the one, rear side of the carrier plate 20 a cylinder 21 is carried having a reciprocating piston rod arrangement 22,23,24. On the other, front side of the carrier plate 20 the piston rod arrangement 22-24 carries a slide 25 having a slide member 26 projecting laterally outwards therefrom. The slide member 26 is adapted to be moved vertically upwards and downwards in a path close to the end face of the bearing 17b at the illustrated right end of the rail 14.

The slide member 26 is shown in its upper position, i.e. in its hook catching position in Fig. 2 and 4, while it is shown in its lower position i.e. in its delivery position in Fig. 3 and 5. The slide member 26 is provided at its lower end with a cavity 27 having a depth corresponding to the thickness of the hook portion 19a on a fish hook 19. The cavity has a horizontally extending upper bounding face 27a and a vertically extending rear bounding face 27b plus a lower bounding face 27c extending obliquely outwards and downwards. In the upper position of the slide member 26 the port opening 27d to the cavity 27 faces towards the right end of the rail 14 flush with an adjacent hook portion 19a of the fish hook 19, which is arranged on the right end of the rail 14. When the slide member 26 assumes the upper hook catching position a fish hook 19' is automatically pressed by the feeding arrangement 11 into the cavity 27 of the slide member 26, as is illustrated in Fig. 4.

More specifically the cavity 27 is designed so that there is only space for a single fish hook 19' at a time in the cavity and so that the fish hook is held stable in place in the cavity during movement of the slide member past the rail 14, but moreover so that the fish hook falls out of the cavity immediately the slide member has passed the rail 14.

Immediately the slide member 26 is pushed downwardly from the illustrated upper hook catching position (Fig. 2 and 4), a front side 26a of the slide member 26 will bar the succeeding fish hook 19'' in the subsequent row of fish hooks, as is illustrated in Fig. 3 and 5.

In Fig. 3 the slide member 26 is shown in its lower hook delivery position, in which the cavity 27 is uncovered for discharging the fish hook 19' into the subsequent chute 13. The discharging occurs due to the fish hook 19' sliding out of engagement with cavity 27 of the slide member along the obliquely extending guide surface 27c and landing in the obliquely extending chute 13 just below the slide member 26.

Thereafter the slide member 26 is led back from the lower delivery position to the upper catch position. A succeeding fish hook 19'' is received automatically in the cavity 27 of the slide member in order in a following cycle to discharge the fish hook 19'' into the chute 13 in a corresponding manner as explained for the fish hook 19'.

As is evident from Fig. 1-3 each of the fish hooks 19 is arranged in a hanging condition with its fish hook shaft 19b supported on one and the same (rear) side of the rail 14. Over the major portion of the area of the rail 14 the fish hook shaft 19b hangs rather steeply downwards. At the right end according to Fig. 1-3 the rail 14 is provided with a guide edge 28 extending obliquely upwards, which permits automatic readjustment of the shaft portion 19b of the fish hooks 19 from a relatively steep to a more obliquely outswung path. This involves the fish hooks 19, even when they find themselves on the rail 14, being swung into place over a guide surface 29 (see Fig. 1) which is located continuously of the subsequent chute 13. Immediately the fish hook 19' slides off from the slide member 26 it is landed in place in a V-shaped groove in the guide surface 29 in order thereafter to slide further into an equivalent V-shaped groove in the intake to the chute 13, with the shaft portion 19b supported along the bottom of the chute 13 and with the hook portion 19a resting against the one, left side (see Fig. 7) of the V-shaped groove in the chute 13.

As is evident from Fig. 1 the chute 13 is divided into four sections 30-33 which are normally mutually partitioned off by means of three flaps 34-36, which are controlled by their respective compressed air cylinders 37,38,39.

A first section 30 is bounded below by a first flap 34, which secures the fish hook 19 in place in an accurately intended position longitudinally on the chute 13 for inspection with quality sorting. In the first section 30 the fish hook 19 is inspected via for example four sensors 41,42,43,44, which sense their respective portion of the fish hook 19, that is to say a first 41 and a second 42 sensor, which sense hook portion 19a of the fish hook 19 and a third 43 and a fourth 44 sensor which sense shaft portion 19b of the fish hook 19. If the fish hook 19 at the inspection undertaken shows itself to be defective, the fish hook is immediately removed from the section 30. In the illustrated embodiment there is shown in Fig. 7 a nozzle-forming bore 45, which discharges into the bottom of the chute 13. By means of compressed air, which is blown through the bore 45, the defective hook is blown sideways towards the left out of the chute 13.

On the other hand, adequate fish hooks pass further in the chute 13, one by one at a time, from the section 30 via the sections 31,32 and 33 one after the other and are fed from the section 33 directly to the intake 13a to a conventional baiting machine in a position adapted for this purpose in readiness for baiting.

The section 30 forms a transition between the guide surface 29 and the chute 13 and is provided with a curved guide surface portion 30a for turning hook portion 19a of the fish hook 19 from an obliquely positioned to a vertically positioned support position, immediately the fish hook is transferred from the section 30 to the section 31.

A second section 31 and a third section 32 which are bounded between their respective pairs of flaps 34,35 and 35,36 form buffers for sorted, accepted fish hooks, so that the baiting machine has available the whole time a supply of made ready, quality sorted fish hooks, whereby the baiting machine can operate at an optimal baiting speed, even on incorporating the quality control of the fish hooks just in front of the intake to the baiting machine.

## Claims

1. Apparatus (10) for conveying fish hooks, especially separate fish hooks, one by one to a baiting machine, comprising a rail (14), for the reception of fish hooks (19) in hanging condition on the top of the rail (14), an associated feeding arrangement (11), for conveying the fish hooks (19) in series along the rail (14) towards its one end, a hook-handling arrangement (12), for handling the fish hooks (19) one after the other relative to the rail (14), and a chute (13), for delivering fish hooks to the baiting machine, characterised in
that the hook-handling arrangement (12) comprises a slide member (26), which is displaceable between a hook catching position (Fig. 2 and 4) and a hook delivery position (Fig. 3 and 5) in a path across said one end of the rail (14),
that the slide member (26) in a front side (26a) thereof is provided with a cavity (27) facing towards the said one end of the rail (14) and adapted for reception or a portion (19a) of a fish hook (19) therein,
that the cavity (27) in said hook catching position of the slide member (26) extends flush with an adjacent fish hock (19) on the rail (14), for automatic reception of an adjacent fish hook (19) by means of the pushing force exerted along the feeding arrangement (11),
that the front side (26a) of the slide member (26) beyond said cavity (27) is adapted to bar a succeeding fish hook in a subsequent row of fish hooks on said feeting arrangement (11) in slide positions outside said hook catching position, and
that the cavity (27) in said hook delivery position of the slide member (26) is uncovered outside the rail (14), for automatic release of the fish hook (19) for delivery of same into the chute (13) to the baiting machine.

2. Apparatus in accordance with claim 1, characterised in
that the slide member (26) consists of a bar-shaped member, which is reciprocatable in vertical directions relative to the rail (14), between an upper hook catching position and a lower hook delivery position, and
that the cavity (27) at its lower end is provided with a guide surface (27c) extending obliquely downwards and outwards for easy discharge of the fish hook from the slide member (26) to the chute (13).

3. Apparatus in accordance with claim 1 or 2, characterised in
that the rail (14) over a major portion of its longitudinal dimension has a side surface to support a shaft portion (19b) of the fish hooks (19) in a relatively steep downwardly extending position,
that the rail (14) over a minor portion of its longitudinal dimension in front of the slide member (26) has an obliquely upwards to the slide member (26) extending guide surface (28) to allow said shaft portion (19b) to assume an outwards and downwards turning support position just in front of the slide member (26), and
that a guide surface (29) between the slide member (26) and the chute (13) has an obliquely outwards and downwards extending path extending substantially in the same direction as that of said shaft portion (19b) of the fish hook (19) in its delivery position.

4. Apparatus in accordance with one of the claims 1-3, characterised in
that the chute (13) is divided into a number of axially succeeding sections (33-33), comprising
a) a first section (30) including a number of sensors (41-44) for quality inspection or a fish hook (19), which is received in the section (30), and also including a device (45) for the removal from the chute of a fish hook (19) which is found to be defective, and
b) one or more succeeding section(s) (31,32) serving as a buffer zone for receiving a respective fish hook, and
c) an additional section (33) forming an intake to said baiting machine.

## Patentansprüche

1. Vorrichtung (10) zum Fördern von Angelhaken, insbesondere separate Angelhaken, einen nach dem anderen zu einem Köderapparat, umfassend eine Schiene (14) zur Aufnahme der Angelhaken (19) in einem hängenden Zustand an der Oberseite der Schiene (14), eine zugeordnete Zufuhranordnung (11) zum Fördern der Angelhaken (19) in Reihe entlang der Schiene (14) zu ihrem einen Ende, eine Haken-Handhabungsvorrichtung (12) zum Handhaben der Angelhaken (19) einen nach dem anderen relativ zur Schiene (14) und eine Rutsche (13) für die Abgabe der Angelhaken an den Köderapparat, dadurch gekennzeichnet,
daß die Haken-Handhabungsvorrichtung (12) ein Gleitelement (26) umfaßt, das zwischen einer Hakenfangposition (Fig. 2 und 4) und einer Hakenabgabeposition (Fig. 3 und 5) in einer Bahn quer über das eine Ende der Schiene (14) bewegbar ist,
daß das Gleitelement (26) in seiner Vorderseite (26a) mit einem Hohlraum (27) versehen ist, der diesem einen Ende der Schiene (14) zugewandt und für die Aufnahme eines Bereichs (19a) eines Angelhakens (19) darin ausgelegt ist,
daß sich der Hohlraum (27) in der Hakenfangposition des Gleitelements (26) bündig mit einem angrenzenden Angelhaken (19) an der Schiene (14) erstreckt, für die automatische Aufnahme eines angrenzenden Angelhakens (19) mittels der entlang der Zufuhranordnung (11) ausgeübten Schubkraft,
daß die Frontseite (26a) des Gleitelements (26) jenseits des Hohlraums (27) einen nachfolgenden Angelhaken in einer folgenden Reihe von Angelhaken an der Zufuhranordnung (11) in Gleitpositionen außerhalb der Hakenfangposition blockiert
und daß der Hohlraum (27) in der Hakenabgabeposition des Gleitelements (26) außerhalb der Schiene (14) freigelegt wird für die automatische Freigabe des Angelhakens (19) zur Abgabe desselben in die Rutsche (13) zu dem Köderapparat.

2. Vorrichtung nach Anspruch 1, dadurch gekennzeichnet,
daß das Gleitelement (26) aus einem balkenförmigen Element besteht, welches relativ zur Schiene (14) in vertikalen Richtungen zwischen einer oberen Hakenfangposition und einer unteren Hakenabgabeposition hin und her bewegbar ist
und daß der Hohlraum (27) an seinem unteren Ende mit einer Führungsfläche (27c) versehen ist, die sich zum leichten Abgeben des Angelhakens von dem Gleitelement (26) an die Rutsche (13) schräg nach unten und nach außen erstreckt.

3. Vorrichtung nach Anspruch 1 oder 2, dadurch gekennzeichnet,
daß die Schiene (14) über einen wesentlichen Teil ihrer Längsabmessung eine Seitenfläche zum Stützen eines Schaftbereichs (19b) des Angelhakens (19) in einer sich relativ steil nach unten erstreckenden Position hat,
daß die Schiene (14) über einen kleineren Teil ihrer Längsabmessung vor dem Gleitelement (26) eine sich schräg nach oben zu dem Gleitelement (26) erstreckende Führungsfläche (28) hat, die erlaubt, daß der Schaftabschnitt (19b) eine sich nach außen und nach unten kehrende Halteposition unmittelbar vor dem Gleitelement (26) einnimmt
und daß eine Führungsfläche (29) zwischen dem Gleitelement (26) und der Rutsche (13) eine sich schräg nach außen und nach unten erstreckende Bahn aufweist, die sich im wesentlichen in der gleichen Richtung wie jene des Schaftbereichs (19b) des Angelhakens (19) in seiner Abgabeposition erstreckt.

4. Vorrichtung nach einem der Ansprüche 1 bis 3, dadurch gekennzeichnet,
daß die Rutsche (13) in eine Anzahl von axial aufeinanderfolgenden Abschnitten (30-33) unterteilt ist, umfassend
a) einen ersten Abschnitt (30) mit einer Anzahl von Sensoren (41-44) zur Qualitätsinspektion eines Angelhakens (19), der in dem Abschnitt (30) empfangen wird, und mit einer Einrichtung (45) zum Entfernen eines als fehlerhaft befundenen Angelhakens (19) von der Rutsche und
b) einen oder mehrere nachfolgende Abschnitte (31,32), die als Pufferzone für den Empfang eines betreffenden Angelhakens dienen, und
c) einen zusätzlichen Abschnitt (33), der den Einlaß zu dem Köderapparat bildet.

## Revendications

1. Appareil (10) de transport d'hameçons, et en particulier d'hameçons séparés, un à un, vers une machine d'amorçage qui comporte un rail (14) destiné à recevoir les hameçons (19) qui sont suspendus à la partie supérieure du rail (14), un ensemble associé (11) d'alimentation destiné à transporter les hameçons (19) en série le long du rail (14) vers sa première extrémité, un ensemble (12) de manipulation d'hameçons destiné à la manipulation des hameçons (19) les uns après les autres par rapport au rail (14), et une goulotte (13) destinée à transmettre les hameçons à la machine d'amorçage, caractérisé en ce que
l'ensemble (12) de manipulation d'hameçons comporte un coulisseau (26) mobile entre une position (figures 2 et 4) de saisie d'hameçons et une position (figures 3 et 5) de distribution d'hameçon suivant un trajet recoupant ladite première extrémité du rail (14),
le coulisseau (26) à sa face avant (26a), possède une cavité (27) tournée vers la première extrémité du rail (14) et destinée à loger une partie (19a) d'un hameçon (19),
la cavité (27) en position de saisie d'hameçon du coulisseau (26) se trouve au niveau d'un hameçon adjacent (19) placé sur le rail (14) afin qu'un hameçon adjacent (19) soit logé automatiquement par la force de poussée appliquée le long de l'ensemble d'alimentation (11),
la face avant (26a) du coulisseau (26), au-delà de la cavité (27), est destinée à arrêter un hameçon suivant de la série d'hameçons placée sur l'ensemble d'alimentation (11) vers des positions de glissement en dehors de la position de saisie d'hameçon, et
la cavité (27), en position de distribution d'hameçon du coulisseau (26), est dégagée à l'extérieur du rail (14) afin qu'elle libère automatiquement l'hameçon (19) et le distribue vers la goulotte (13) dirigée vers la machine d'amorçage.

2. Appareil selon la revendication 1, caractérisé en ce que
le coulisseau (26) comporte un organe en forme de barre qui peut se déplacer alternativement en direction verticale par rapport au rail (14) entre une position supérieure de saisie d'hameçon et une position inférieure de distribution d'hameçon, et
la cavité (27), à son extrémité inférieure, possède une surface de guidage (27c) disposée obliquement vers le bas et vers l'extérieur afin que l'hameçon puisse être évacué facilement du coulisseau (26) vers la goulotte (13).

3. Appareil selon la revendication 1 ou 2, caractérisée en ce que
le rail (14), sur la plus grande partie de sa dimension longitudinale, a une surface latérale destinée à supporter une partie de tige (19b) des hameçons (19) an position descendante relativement très inclinée,
le rail (14) sur une petite partie de sa dimension longitudinale et en avant du coulisseau (26) a une surface de guidage (28) dirigée obliquement vers le haut vers le coulisseau (26) afin que la partie de tige (19b) puisse prendre une position de support tournée vers l'extérieur et vers le bas juste en avant du coulisseau (26), et
une surface de guidage (29) placée entre le coulisseau (26) et la goulotte (13) a un trajet dirigé obliquement vers l'extérieur et vers le bas, placé pratiquement dans la même direction que la partie de tige (19b) de l'hameçon (19) dans sa position de distribution.

4. Appareil selon l'une des revendications 1 à 3, caractérisé en ce que
la goulotte (13) est divisée en un certain nombre de tronçons successifs axialement (30-33), comprenant
a) un premier tronçon (30) qui comprend un certain nombre de capteurs (41-44) d'inspection de qualité d'un hameçon (19) logé dans le tronçon (30), et comprenant aussi un dispositif (45) d'extraction d'un hameçon (19) déterminé comme étant défectueux vers l'extérieur de la goulotte,
b) un ou plusieurs tronçons successifs (31, 32) utilisés comme zone tampon pour le logement d'un hameçon respectif, et
c) un tronçon supplémentaire (33) formant une entrée de la machine d'amorçage.
